# FASCICULE DE BREVET EUROPEEN

(11) **EP 1 097 448 B1**
(45) Date de publication et mention de la délivrance du brevet: **06.11.2002**
(21) Numéro de dépôt: 99957209.2
(22) Date de dépôt: 23.06.1999
(51) Int. Cl.: G11B 5/31

(54) **PROCEDE DE REALISATION D'UNE TETE MAGNETIQUE D'ENREGISTREMENT/LECTURE ET APPLICATION A UNE TETE MATRICIELLE**
HERSTELLUNGSVERFAHREN EINES AUFZEICHNUNGS/WIEDERGABEMAGNETKOPFS UND ANWENDUNG ALS MATRIXKOPF
METHOD FOR PRODUCING A MAGNETIC RECORDING/READING HEAD AND APPLICATION IN A MATRIX HEAD

(30) Priorité: 23.06.1998 FR 9807913
(43) Date de publication de la demande: 09.05.2001
(73) Titulaire: Thales, 75008 Paris (FR)
(72) Inventeur: DOREL, Marc, Thomson-CSF Propriété Intellectuelle, F-94117 Arcueil Cedex (FR); HUMBERT, Josette, Thomson-CSF Prop. Intellectuelle, F-94117 Arcueil Cedex (FR); VILAIN, Gervaise, Thomson-CSF Prop. Intellectuelle, F-94117 Arcueil Cedex (FR)
(86) Numéro de dépôt international: FR9901499
(87) Numéro de publication internationale: WO99067777

(56) Documents cités:
- FR-A- 2 676 301
- US-A- 5 600 880
- US-A- 5 734 519
- US-A- 5 754 377

## Description

L'invention concerne le procédé de fabrication de têtes magnétiques d'enregistrement/lecture, utilisables notamment pour l'enregistrement/lecture de bandes magnétiques multipistes. L'invention est également applicable à l'enregistrement/lecture de tout autre support d'information. Son domaine d'application peut être aussi bien l'enregistrement audio et/ou vidéo que l'enregistrement de données informatiques. Ces têtes sont actuellement réalisées sur un substrat céramique muni de vias conductrice sur lequel l'ensemble du composant est fabriqué. La demande de brevet français FR-A-2 750 787 décrit à la fois un tel composant et son procédé de fabrication.

L'invention concerne un procédé de fabrication d'une tête magnétique, plus particulièrement la fabrication des pôles magnétiques avec pour but de diminuer les aspects critiques des étapes correspondantes et donc d'augmenter les possibilités de fabrication industrielles.

La méthode utilisée dans la demande de brevet français FR-A-2 750 787 comprend pour la fabrication des pôles, principalement trois étapes:
1°) fabrication d'un premier pôle magnétique,
2°) fabrication de l'entrefer E1 et du deuxième pôle magnétique,
3°) individualisation des têtes d'écriture de la tête matricielle.

Ces dernières étapes du procédé de fabrication sont fondamentales car elles déterminent les performances du composant. Elles sont critiques du fait des dimensions géométriques exigées pour l'obtention de ces performances :
- largeur de l'entrefer de l'ordre de 0,4 µm ;
- longueur de l'entrefer de l'ordre de 5 µm ;
- épaisseur des pôles de l'ordre de 3 µm ;
- pente de l'entrefer la plus verticale possible ;
- parfaite rectitude de l'entrefer.

Le premier pôle magnétique peut être fabriqué par usinage ionique d'une couche de matériau magnétique au travers d'un masque. Deux options sont possible :
- utilisation d'un masque dur (carbone adamantin par exemple) mais, si le bord du pôle ainsi réalisé (donc la rectitude de l'entrefer) est satisfaisant, la pente du pôle est trop importante (environ 45°) ;
- utilisation d'un masque en résine photosensible qui permet d'obtenir une pente de l'entrefer de 70 à 80° mais avec lequel la rectitude du bord de pôle est difficile à maîtriser de manière reproductible tant sur un même substrat que sur deux lots différents.

L'entrefer et le deuxième pôle peuvent être ensuite réalisés par dépôt des matériaux diélectrique et magnétique puis par polissage de la pièce ; c'est l'épaisseur de diélectrique déposée sur le bord du premier pôle qui détermine la largeur de l'entrefer.

L'individualisation des têtes d'écriture est enfin réalisée par usinage ionique au travers d'un masque.

En terme industriel, la principale faiblesse de cette méthode de fabrication réside dans l'utilisation de la gravure et notamment l'usinage ionique à travers un masque de résine photosensible.

Deux raisons expliquent ce choix :
1°) la difficulté à mettre en oeuvre les procédés de gravure chimique réactive du matériau magnétique à des températures raisonnables (absence de composé volatil du fer en dessous de 250°C) impose l'usinage ionique ;
2°) le besoin d'un flanc très vertical force l'utilisation d'un masque résine.

De ce fait, le procédé de gravure n'est pas sélectif entre le masque et le matériau.

D'autre part, il serait intéressant, dans le but d'améliorer la résistance à l'usure du composant, d'encapsuler les pôles d'écriture dans un matériau isolant. De cette manière, la bande magnétique ne porterait plus exclusivement sur les pôles mais sur une surface plus grande. Le procédé actuel implique pour cela un dépôt de diélectrique épais puis un polissage de l'ensemble pour dégager les pôles d'écriture.

L'état de la technique le plus proche est US-A-5754377 qui décrit un procédé de réalisation d'une tête magnétique en couches minces (voir notamment les figures 15 à 22). Toutefois, ce procédé ne comprend pas une étape de réalisation d'un deuxième masque sur la couche d'encapsulation (600) et sur le premier masque. En effet, bien que US-A-5754377 ne précise pas toujours quand et où des masques sont formés, il ne semble pas qu'il soit envisagé de superposer deux masques sur la couche d'encapsulation. Au contraire, il semble bien qu'après chaque gravure le masque utilisé est enlevé, puis un autre masque est formé pour la gravure suivante sans qu'il y ait de superposition de masques.

L'invention permet donc de résoudre ces différents problèmes.

L'invention concerne donc un procédé de réalisation d'une tête magnétique en couches, à la surface d'un substrat comportant une couche de matériau magnétique et, sur cette couche, au moins deux plots magnétiques et au moins un conducteur électrique formant bobinage d'induction magnétique pour l'un des plots magnétiques, caractérisé en ce qu'il comprend les étapes suivantes:
a) - réalisation sur l'ensemble plots magnétiques et conducteur, d'une couche d'un matériau d'encapsulation ;
b) - réalisation sur la couche d'encapsulation d'un premier masque laissant libre sur la couche d'encapsulation une surface correspondant à la forme de deux pôles magnétiques à réaliser ;
c) - réalisation sur la couche d'encapsulation et sur le premier masque d'un deuxième masque laissant libre une surface correspondant à la forme d'un premier pôle magnétique à réaliser ;
d) - gravure de la couche d'encapsulation dans la surface laissée libre par les deux masques et cela jusqu'à au moins un plot magnétique ;
e) - dépôt d'une première couche de matériau magnétique sur l'ensemble ainsi réalisé ;
f) - polissage de la couche de matériau magnétique jusqu'à atteindre les masques et obtenir un premier pôle magnétique ;
g) - attaque du deuxième masque ;
h) - gravure de la couche d'encapsulation dans la surface laissée libre par le premier masque et par la première couche de matériau magnétique ;
i) - dépôt sur l'ensemble d'une couche d'un matériau non magnétique puis d'une deuxième couche d'un matériau magnétique ;
j) - polissage jusqu'à atteindre la première couche de matériau magnétique.

Les différents objets et caractéristiques apparaîtront plus clairement dans la description faite à titre d'exemple non limitatif et dans les figures annexées qui représentent :
- les figures 1a à 1o, un exemple de procédé de réalisation d'une tête magnétique selon l'invention ;
- les figures 2a à 2f, une application du procédé de l'invention à la réalisation d'une matrice de têtes magnétiques.

Pour simplifier l'explication du procédé de l'invention, nous allons tout d'abord décrire le procédé de réalisation d'une tête magnétique seule. Nous décrirons ensuite l'application de ce procédé à un composant comprenant un ensemble de têtes arrangées en matrice.

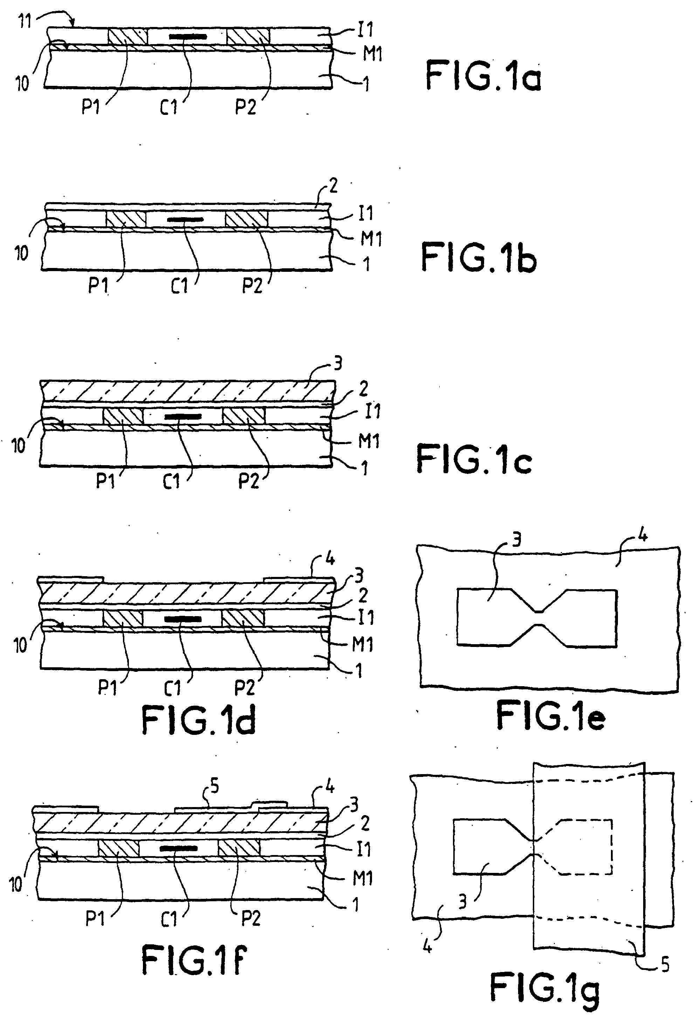

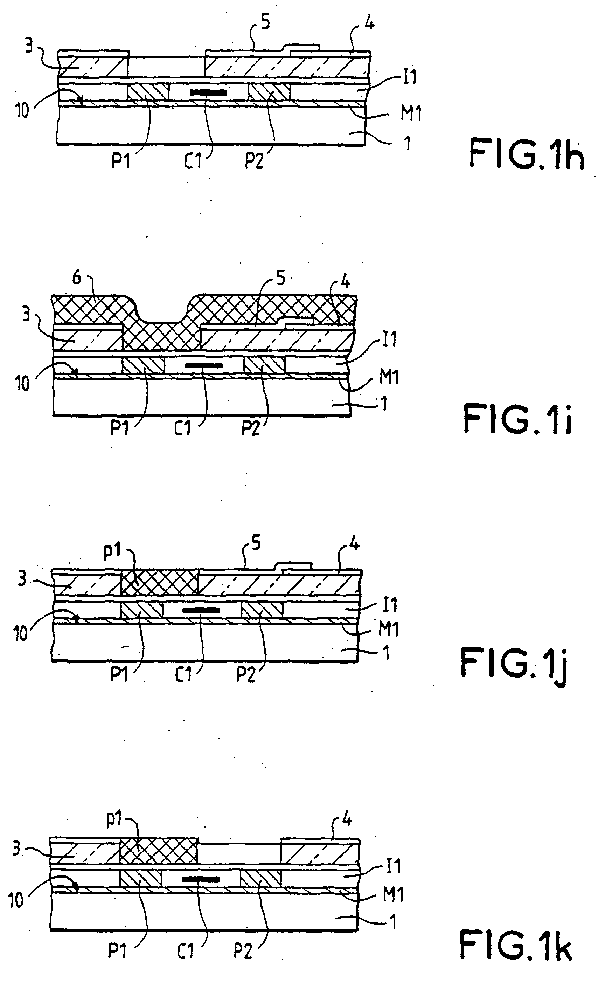

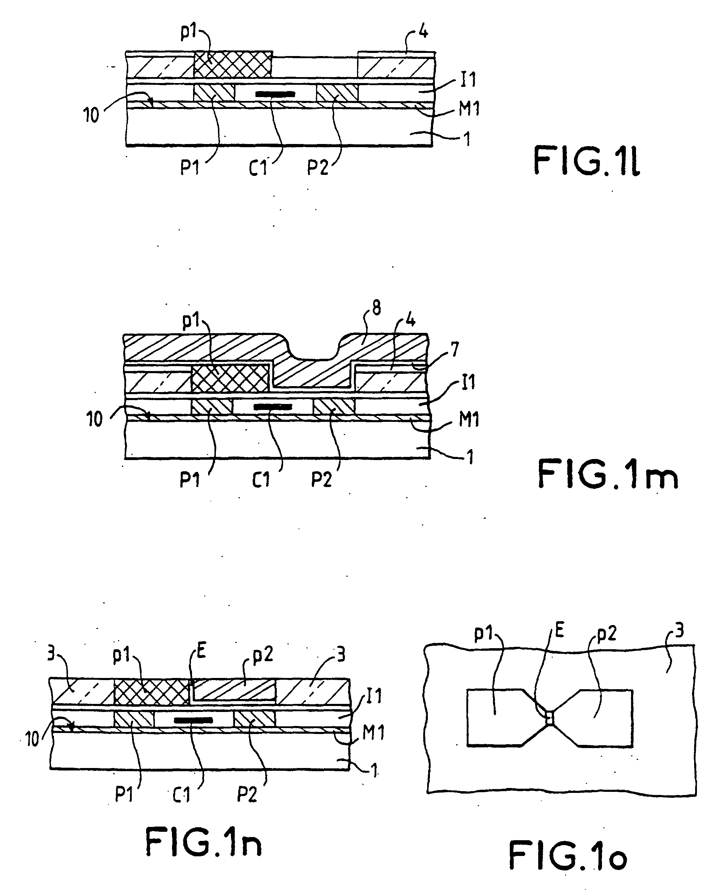

Tout d'abord comme cela est représenté en figure 1, on réalise une plaque support comportant sur un substrat 1 :
- une couche magnétique M1 ;
- sur cette couche magnétique : deux plots magnétiques P1 et P2 et un conducteur C1 servant à l'induction d'un champ magnétique dans l'ensemble couche magnétique/plots magnétiques.

Un matériau I1 non magnétique et isolant électrique entoure les plots magnétiques et le conducteur C1 de façon à fournir une surface plane 11 au niveau de laquelle les plots magnétiques affleurent.

La couche magnétique M1 n'est pas nécessaire si le substrat 1 est en matériau magnétique.

Au cours d'une première étape (figure 1b) on réalise une couche d'arrêt d'attaque chimique 2 à l'aide d'un matériau diélectrique (Al₂O₃ par exemple) assurant une bonne sélectivité vis-à-vis des étapes de gravures ultérieures. L'épaisseur de cette couche doit être faible (environ 0,1 µm) pour ne pas perturber le fonctionnement de la tête magnétique. Cependant si le ou les matériaux de la surface 11 assurent la sélectivité chimique aux gravures qui seront effectuées dans la suite du procédé, il n'est pas nécessaire de prévoir cette étape de dépôt de cette couche d'arrêt d'attaque chimique.

Au cours d'une deuxième étape (figure 1c) on réalise le dépôt d'une couche épaisse 3 d'un matériau diélectrique. Il s'agit de la couche dans laquelle seront « moulés » les pôles magnétiques. Son épaisseur doit donc être légèrement supérieure à l'épaisseur visée pour les pôles (soit environ 4 µm). Elle doit pouvoir être gravée de manière sélective par rapport au matériau précédent. Cette couche est donc réalisée par exemple en SiO₂.

Au cours d'une troisième étape (figures 1d, 1e) on réalise sur la couche 3, un premier masque 4 définissant la forme globale des deux pôles de la tête magnétique comme cela est représenté en figure 1e. Ce masque est de préférence réalisé dans le même matériau que la couche d'arrêt 2, c'est-à-dire en Al₂O₃ par exemple. Son épaisseur (0,1 µm par exemple) peut rester faible puisqu'il possède une bonne sélectivité par rapport au matériau de la couche 3. Cette faible épaisseur permet de le fabriquer, par exemple, par dépôt puis usinage ionique du matériau au travers d'un masque en résine photosensible.

Au cours d'une quatrième étape (figures 1f et 1g), on réalise un deuxième masque 5 qui ne laisse libre dans le premier masque 4 uniquement que la surface nécessaire à la réalisation d'un premier pôle. Avantageusement, ce masque prend la forme d'une bande (figure 1g) qui occulte dans le premier masque la surface du deuxième pôle à réaliser.

Ce masque doit être réalisé dans un matériau qui permet une gravure sélective par rapport aux matériaux de la couche 2 et du masqué 4. Un masque métallique (aluminium par exemple) convient parfaitement. Là encore une faible épaisseur (moins de 0,1 µm) suffit permettant une réalisation du masque par photogravure au travers d'un masque de résine.

Au cours d'une cinquième étape on effectue une gravure de la couche 3 (en SiO₂) dans l'espace laissé libre par les masques 4 et 5 (voir figure 1h). Cette gravure est faite par RIE (Reactive lonic Etching). Elle s'arrête sur la couche 2. Elle permet d'obtenir des flancs de gravure quasiment verticaux et rectilignes dans la couche 3.

Au cours d'une sixième étape (figure 1i) on réalise un dépôt de matériau magnétique 6. L'épaisseur de ce dépôt est supérieure à l'épaisseur de la couché 3 et des masques (par exemple 4,5 à 5 µm).

Au cours d'une septième étape, on procède à la planarisation de la surface de la structure obtenue (figure 1j) jusqu'à définition du premier pôle p1 magnétique de la tête magnétique.

Lors de cette phase, l'utilisation d'un procédé de polissage sélectif (planarisation mécano-chimique) permet d'enlever le matériau magnétique laissant intact les deux masques précédents. Remarquons que le matériau magnétique au-dessus de l'emplacement du futur deuxième pôle est enlevé par sur-polissage ce que permet la faible épaisseur du masque métallique 5.

Au cours d'une huitième étape, on procède à la gravure du deuxième masque 5. L'espace du futur deuxième pôle de la tête magnétique défini par le premier masque est ainsi démasqué (figure 1k).

Au cours d'une neuvième étape on grave la couche 3 laissée libre par le premier masque 4 et par le premier pôle p1. Cette gravure peut se faire comme précédemment par RIE. La place du deuxième pôle est ainsi réalisée (figure 11).

Au cours d'une dixième étape on réalise un dépôt d'un matériau non magnétique 7 d'une épaisseur correspondant à celle de l'épaisseur de l'entrefer à obtenir (par exemple une couche de 0,6 µm environ fournira un entrefer de 0,3 µm entre les pôles).

Au cours d'une onzième étape on réalise à nouveau un dépôt d'un matériau magnétique 8 d'une épaisseur supérieure à celle de la couche 3 et du masque 4 (figure 1m).

Enfin, au cours d'une douzième étape, on effectue une planarisation de cette couche de matériau magnétique jusqu'à atteindre le premier pôle p1 et jusqu'à définition de l'entrefer E entre les deux pôles p1 et p2. Cette planarisation ne peut pas être sélective du fait de la structure à polir (présence de deux matériaux différents). Il faut enlever la matière jusqu'à disparition des masques et définition de l'entrefer. On obtient ainsi la tête magnétique représentée en figures 1n et 1o.

On va maintenant décrire l'application du procédé précédent à la réalisation d'une tête matricielle.

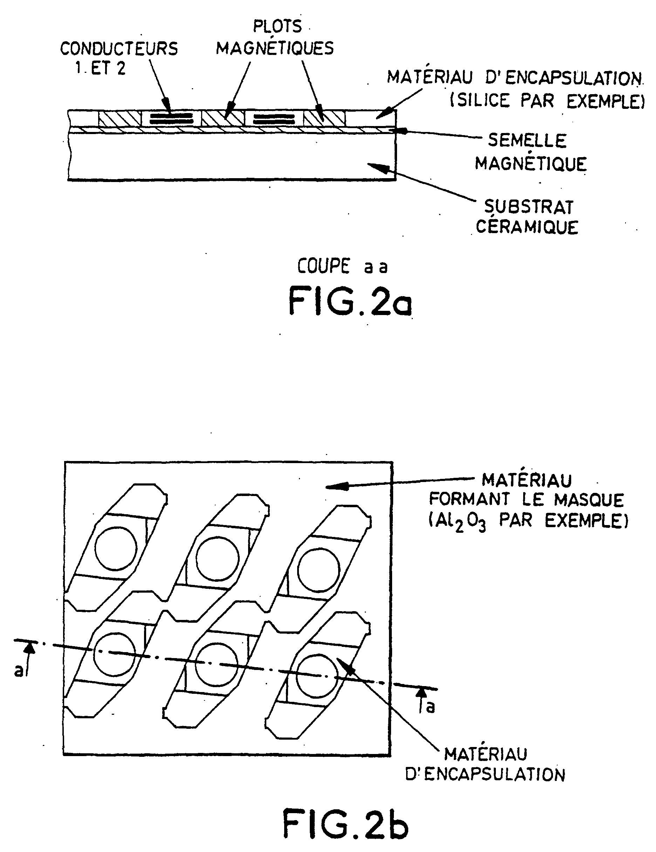

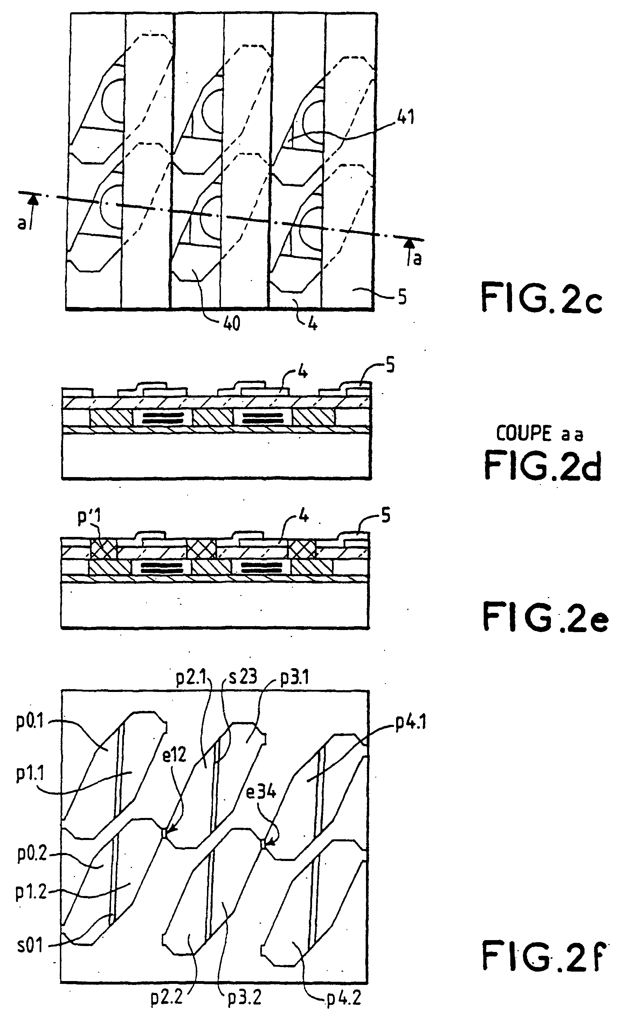

La plaque support de départ comportant des plots magnétiques et conducteurs d'induction de champ magnétique se présente sous une forme telle que représentée en figures 2a et 2b.

Après réalisation des différentes étapes correspondant aux figures 1b à 1g, on obtient une structure telle que représentée en figures 2c et 2d.

Le masque 4 définit une matrice de zones non masquées 40 arrangées en lignes et colonnes. Chaque zone correspond à deux pôles magnétiques et est située au-dessus d'un plot magnétique. Chaque zone 40 est reliée à au moins une autre zone voisine 40 par une zone 41 dans laquelle sera fabriqué l'entrefer d'une tête magnétique.

Le masque 5 est réalisé sous forme de bandes rectilignes Chaque bande recouvre partiellement une moitié des zones d'une colonne. Un bord de chaque bande passe au-dessus du centre des plots magnétiques d'une colonne de la matrice et l'autre bord de chaque bande passe au-dessus des zones 41 d'une colonne.

Après les étapes correspondant aux figures 1h à 1j, on obtient (voir figure 2f) une matrice de pôles p0.1, p0.2, p2.1, p2.2, p4.1, etc.

Après les étapes correspondant aux figures 1k à 1m, on obtient avoir figure 2f) une matrice de têtes magnétiques telles que p1.2-p2.1, p3.2-p4.1. On voit donc que le premier masque 4 a permis de définir les formes des pôles et que le deuxième masque a permis de séparer les zones des pôles aux niveaux des entrefers tels que e12 et e34 ainsi qu'au-dessus des plots magnétiques tels que en s01 et s23.

De façon générale, l'idée directrice de l'invention est d'utiliser au maximum les sélectivités entre matériaux, que ce soit pour la gravure ou le polissage. Cela implique l'utilisation d'un procédé de gravure ionique réactive et d'un polissage mécano-chimique.

## Revendications

1. Procédé de réalisation d'une tête magnétique en couches, sur une face (10) d'un substrat (1) comportant une couche de matériau magnétique (M1) et, sur cette couche, au moins deux plots magnétiques (P1 et P2) ainsi qu'au moins un conducteur électrique (C1, C2) formant bobinage d'induction magnétique pour l'un des plots magnétiques :
a) - réalisation sur l'ensemble plots magnétiques et conducteur, d'une couche d'un matériau d'encapsulation (3) ;
b) - réalisation sur la couche d'encapsulation (3) d'un premier masque (4) laissant libre sur la couche d'encapsulation une surface correspondant à la forme de deux pôles magnétiques à réaliser ;
c) - réalisation sur la couche d'encapsulation (3) et sur le premier masque (3) d'un deuxième masque (5) laissant libre une surface correspondant à la forme d'un premier pôle magnétique à réaliser ;
d) - gravure de la couche d'encapsulation (3) dans la surface laissée libre par les deux masques et cela jusqu'à au moins un plot magnétique ;
e) - dépôt d'une première couche (6) de matériau magnétique sur l'ensemble ainsi réalisé ;
f) - polissage de la couche de matériau magnétique jusqu'à atteindre les masques et obtenir un premier pôle magnétique ;
g) - attaque du deuxième masque ;
h) - gravure de la couche d'encapsulation (3) dans la surface laissée libre par le premier masque et par la première couche de matériau magnétique ;
i) - dépôt sur l'ensemble d'une couche d'un matériau (7) non magnétique puis d'une deuxième couche (8) d'un matériau magnétique ;
j) - polissage jusqu'à atteindre la première couche de matériau magnétique.

2. Procédé selon la revendication 1, **caractérisé en ce que** l'étape (a) est précédée par la réalisation d'une couche d'arrêt d'attaque chimique (2) chimiquement différente de la couche d'encapsulation (3) sur l'ensemble plots magnétiques et des conducteurs.

3. Procédé selon la revendication 1, **caractérisé en ce que** les deux masques (4, 5) sont en matériaux différents de façon à pouvoir être attaqués chimiquement de façon sélective.

4. Procédé selon la revendication 2, **caractérisé, en ce que** la couche d'arrêt d'attaque chimique est en Al₂O₃ et la couche d'encapsulation est en SiO₂.

5. Procédé selon la revendication 3, **caractérisé en ce que** le premier masque (4) est en Al₂O₃ et le deuxième masque est en aluminium.

6. Procédé de réalisation d'une matrice de têtes magnétiques appliquant le procédé selon l'une quelconque des revendications 1 à 5, **caractérisé en ce que** le premier masque (4) permet de définir des zones (40) communes à deux pôles (p0.3, p1.2) de deux têtes magnétiques voisines.

7. Procédé de réalisation selon la revendication 6, **caractérisé en ce que** le deuxième masque (5) comporte des bandes rectilignes de masque permettant de séparer en deux parties chaque dite zone (40) définie par le premier masque et de séparer les deux pôles de chaque tête au niveau de chaque entrefer (e12, e34).

## Claims

1. Method for producing a magnetic head in layers, on one face (10) of a substrate (1) comprising a layer of magnetic material (M1) and, on this layer, at least two magnetic pads (P1 and P2) together with at least one electric conductor (C1, C2) forming a magnetic induction will for one of the magnetic pads; **characterized in that** it compriser the following steps:
a) - producing an encapsulation layer (3) on the magnetic pad and conductor assembly;
b) - producing a first mask (4) on the encapsulation layer (3) exposing the encapsulation layer a surface corresponding to the shape of two magnetic poles to be produced;
c) - producing a second mask (5) on the encapsulation layer (3) and on the first mask (3), exposing a surface corresponding to the shape of a first magnetic pole to be produced;
d) - etching the encapsulation layer (3) on the surface exposed by the two masks up to at least one magnetic pad;
e) - depositing a first layer (6) of magnetic material on the assembly thus produced;
f) - polishing the layer of magnetic material until reaching the masks and obtaining a first magnetic pole;
g) - etching the second mask;
h) - etching the encapsulation layer (3) on the surface exposed by the first mask and by the first layer of magnetic material;
i) - depositing a layer (7) of a non-magnetic material then a second layer (8) of a magnetic material onto the assembly;
j) - polishing down to the first layer of magnetic material.

2. Method according to Claim 1, **characterized in that** step (a) is preceded by producing a chemical etching stop layer (2) which is chemically different from the encapsulation layer (3) on the magnetic pad and conductor assembly.

3. Method according to Claim 1, **characterized in that** the two masks (4, 5) are made of different materials so that they can be chemically etched in a selective manner.

4. Method according to Claim 2, **characterized in that** the chemical etching stop layer is made of Al₂O₃ and the encapsulation layer is made of SiO₂.

5. Method according to Claim 3, **characterized in that** the first mask (4) is made of Al₂O₃ and the second mask is made of aluminium.

6. Method for producing a matrix of magnetic heads applying the method according to any one of Claims 1 to 5, **characterized in that** the first mask (4) makes it possible to define regions (40) common to two poles (p0.3, p1.2) of two neighbouring magnetic heads.

7. Production method according to Claim 6, **characterized in that** the second mask (5) comprises straight strips of mask making it possible to separate each said region (40), defined by the first mask, into two parts and to separate the two poles of each head at each air gap (e12, e34).

## Patentansprüche

1. Verfahren zur Herstellung eines aus Schichten aufgebauten Magnetkopfs auf der Oberseite eines Substrats (1), das eine Schicht aus magnetischem Material (M1) und auf dieser Schicht mindestens zwei Magnetbereiche (P1 und P2) sowie mindestens einen elektrischen Leiter (C1, C2) enthält, der eine magnetische Induktionsschleife für einen der Magnetbereiche bildet, **dadurch gekennzeichnet, daß** das Verfahren folgende Schritte aufweist:
a) auf die Einheit aus Magnetbereichen und Leitern wird eine Schicht aus einem Umhüllungsmaterial (3) aufgebracht,
b) auf die Umhüllungsschicht (3) wird eine erste Maske (4) aufgebracht, die auf der Umhüllungsschicht eine Fläche entsprechend der Form von zwei herzustellenden Magnetpolen freiläßt,
c) auf die Umhüllungsschicht (3) und die erste Maske (4) wird eine zweite Maske (5) aufgebracht, die eine Fläche entsprechend der Form eines ersten herzustellenden Magnetpols freiläßt,
d) die Umhüllungsschicht (3) wird in der von den beiden Masken freigelassenen Fläche bis mindestens auf einen Magnetpol abgeätzt,
- e) eine erste Schicht (6) aus magnetischem Material wird auf die so gebildete Struktur aufgebracht,
f) die Schicht aus magnetischem Material wird abgeschliffen, bis die Masken erreicht werden und ein erster Magnetpol erhalten wird,
g) die zweite Maske wird weggeätzt,
h) die Umhüllungsschicht (3) wird von der Fläche weggeätzt, die von der ersten Maske und der ersten Schicht aus magnetischem Material freigelassen wurde,
i) auf die ganze Struktur werden eine Schicht (7) aus einem unmagnetischen Material und dann eine zweite Schicht (8) aus einem magnetischem Material aufgebracht,
j) die Struktur wird abgeschliffen, bis die erste Schicht aus magnetischem Material erreicht wird.

2. Verfahren nach Anspruch 1, **dadurch gekennzeichnet, daß** dem Schritt (a) die Herstellung einer Sperrschicht gegen chemischen Angriff vorausgeht, die sich chemisch von der Umhüllungsschicht (3) unterscheidet und sich über alle Magnetbereiche und Leiter erstreckt.

3. Verfahren nach Anspruch 1, **dadurch gekennzeichnet, daß** die beiden Masken (4, 5) aus unterschiedlichen Materialien sind, sodaß sie chemisch selektiv angegriffen werden können.

4. Verfahren nach Anspruch 2, **dadurch gekennzeichnet, daß** die Sperrschicht gegen chemische Angriffe aus Al₂O₃ und die Umhüllungsschicht aus SiO₂ ist.

5. Verfahren nach Anspruch 3, **dadurch gekennzeichnet, daß** die erste Maske (4) aus Al₂O₃ und die zweite Maske aus Aluminium ist.

6. Verfahren zur Herstellung einer Matrix von Magnetköpfen in Anwendung des Verfahrens nach einem der Ansprüche 1 bis 5, **dadurch gekennzeichnet, daß** die erste Maske (4) Zonen (40) zu definieren vermag, die für zwei Pole (p0.3, p1.2) von zwei benachbarten Magnetköpfen gemeinsam sind.

7. Verfahren nach Anspruch 6, **dadurch gekennzeichnet, daß** die zweite Maske (5) geradlinige Maskenbänder enthält, die jede durch die erste Maske definierte Zone (40) in zwei Teilbereiche und die beiden Pole jedes Kopfs in Höhe jedes Magnetspalts (e12, e34) voneinander zu trennen vermag.
